# EUROPEAN PATENT SPECIFICATION

(11) **EP 4 235 599 B1**
(45) Date of publication and mention of the grant of the patent: **15.04.2026**
(21) Application number: 22158794.2
(22) Date of filing: 25.02.2022
(51) Int. Cl.: G06V 10/774, G06V 40/00

(54) **ANNOTATION REFINEMENT FOR SEGMENTATION OF WHOLE-SLIDE IMAGES IN DIGITAL PATHOLOGY**
VERFEINERUNG DER ANNOTATIONEN FÜR DIE SEGMENTIERUNG VON GANZDIA-BILDERN IN DER DIGITALEN PATHOLOGIE
AFFINAGE D'ANNOTATION POUR LA SEGMENTATION D'IMAGES PLEIN CHAMP EN PATHOLOGIE NUMÉRIQUE

(43) Date of publication of application: 30.08.2023
(73) Proprietor: Siemens Healthineers AG, 91301 Forchheim (DE)
(72) Inventor: Aichert, André, 91052 Erlangen (DE); Teichmann, Marvin, 91054 Erlangen (DE); Tamersoy, Birgi, 91052 Erlangen (DE); Adiyoso, Arnaud Arindra, 90431 Nürnberg (DE); Kraus, Martin, 90765 Fürth (DE)
(74) Representative: Siemens Healthineers Patent Attorneys

(56) References cited:
- KORBAR BRUNO ET AL: "Looking Under the Hood: Deep Neural Network Visualization to Interpret Whole-Slide Image Analysis Outcomes for Colorectal Polyps", 2017, pages 69 - 75, XP055942202, Retrieved from the Internet <URL:https://openaccess.thecvf.com/content_cvpr_2017_workshops/w8/papers/Korbar_Looking_Under_the_CVPR_2017_paper.pdf> [retrieved on 20220713]
- IZADYYAZDANABADI MOHAMMADHASSAN ET AL: "Weakly-Supervised Learning-Based Feature Localization for Confocal Laser Endomicroscopy Glioma Images", 26 September 2018, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 300 - 308, ISBN: 978-3-319-10403-4, XP047495947
- LI YAMEI ET AL: "SAP-cGAN: Adversarial learning for breast mass segmentation in digital mammogram based on superpixel average pooling", vol. 48, no. 3, 10 January 2021 (2021-01-10), US, pages 1157 - 1167, XP055942216, ISSN: 0094-2405, Retrieved from the Internet <URL:https://onlinelibrary.wiley.com/doi/full-xml/10.1002/mp.14671> DOI: 10.1002/mp.14671
- R�GIS VAILLANT ET AL: "An Original Approach for the Localization of Objects in Images", 1993, pages 1 - 16, XP055077236, Retrieved from the Internet <URL:http://yann.lecun.com/exdb/publis/pdf/vaillant-monrocq-lecun-94.pdf> [retrieved on 20130830]
- CHAOHAO XIE ET AL: "Learning Class-Agnostic Pseudo Mask Generation for Box-Supervised Semantic Segmentation", ARXIV.ORG, CORNELL UNIVERSITY LIBRARY, 201 OLIN LIBRARY CORNELL UNIVERSITY ITHACA, NY 14853, 9 March 2021 (2021-03-09), XP081908415
- AUSTIN MCEVER R ET AL: "PCAMs: Weakly Supervised Semantic Segmentation Using Point Supervision", ARXIV.ORG, CORNELL UNIVERSITY LIBRARY, 201 OLIN LIBRARY CORNELL UNIVERSITY ITHACA, NY 14853, 10 July 2020 (2020-07-10), XP081719619

## Description

Various examples of the disclosure pertain to determining a ground truth for when performing a training of a machine-learning algorithm in the context of digital pathology. More specifically, various examples pertain to determining an annotation of a whole slide image depicting tissue of multiple types and using the annotation for training of a segmentation algorithm.

In histopathology, a tissue sample of a patient is inspected to study a manifestation of a disease such as cancer.

Conventionally, a practitioner can manually inspect the tissue samples - e.g., stained using a chemical stain - using a microscope. In further detail, thin tissue slides are prepared by sectioning a tissue sample. Then, an image is acquired depicting the tissue slide.

Recently, algorithmic analysis of tissue samples has become possible. This is referred to as digital pathology. Reference techniques of digital pathology use Convolutional Neural Networks (CNNs) as an example of machine-learning (ML) algorithms. Such techniques are described in: Karen Simonyan and Andrew Zisserman. Very deep convolutional networks for large-scale image recognition. arXiv preprint arXiv:1409.1556, 2014. Such techniques are further described in: Kaiming He, Xiangyu Zhang, Shaoqing Ren, and Jian Sun. Deep residual learning for image recognition. CoRR, abs/1512.03385, 2015. Such techniques are further described in: Mingxing Tan and Quoc V Le. Efficientnet: Rethinking model scaling for convolutional neural networks. arXiv preprint arXiv:1905.11946, 2019. Such techniques are further described in: Ilija Rados-avovic, Raj Prateek Kosaraju, Ross Girshick, Kaiming He, and Piotr Dollár. Designing network design spaces. In Proceedings of the IEEE/CVF Conference on Computer Vision and Pattern Recognition, pages 10428-10436, 2020.

Oftentimes, digital pathology requires processing large images, e.g., Whole Slide Tissue Images (WSI). A WSI depicts a microscopically magnified tissue slide of macroscopic scale, e.g., centimeters; thus, the WSI can include a large number of pixels. WSIs typically come at a size of tens of thousands of pixels in each dimension. Tissue slides either from biopsies or resected tumor tissue are prepared on glass slides, which can be scanned by a digital microscope in high resolution (gigapixels) and high throughput. Because of their size and number, WSI is especially well-suited for data-hungry ML algorithms. They can be processed by an ML algorithm as a whole or on the basis of small image patches cut out from the large images.

It has been found that training ML algorithms to process WSIs can be time consuming and/or error prone. The sheer amount of image data oftentimes requires large amounts of expensive annotations for supervised learning. Annotations - including ground-truth labels for the training process - are expensive and time consuming and pathology requires specific solutions with training and validation data for a myriad of specific tissue or cancer types, organs, resection versus biopsy and possibly parameters of the preparation of the physical tissue sample (fixation, dies, slicing etc.). For example, for a standard tumor recognition task which is used as intermediate representation in many ML-based pathology systems, the pathologist is required to provide local, ideally pixelwise ground-truth labels for the training process of the ML algorithm. In addition, obtaining high-resolution ground-truth labels can be challenging since there are many fine structures and areas which are hard to categorize, even for a domain expert.

There are several approaches to address high cost and lack of annotations. First of all, not all samples of training data are equally informative. Annotation frequent and/or simple-to-detect samples may not contribute in the same amount to better performance as annotation of rare and/or difficult-to-detect samples of training data. A good set of samples is diverse across the various types that are to be detected by the ML algorithm and covers the whole distribution of possible samples. Active learning is an interactive process, where the added value of having a certain sample labeled is explicitly modelled, thus presenting the annotator with a careful selection of valuable samples. Visual similarity can be assessed in an unsupervised manner to maximize the diversity of samples. Uncertainty can be used as an indicator that more data of a certain kind is needed. Most active learning approaches use the latter or a combination of the two criteria to maximize the training performance while minimizing the amount of labeled data. An example of this process that was also applied to WSI can be found in Yang, Lin, et al. "Suggestive annotation: A deep active learning framework for biomedical image segmentation." International conference on medical image computing and computer-assisted intervention. Springer, Cham, 2017. An example that applies a one-shot strategy and therefore mostly relies on the first criterion can be found in Zheng, Hao, et al. "Biomedical image segmentation via representative annotation." Proceedings of the AAAI Conference on Artificial Intelligence. Vol. 33. No. 01. 2019.

Korbar Bruno et al. in "Looking Under the Hood: Deep Neural Network Visualization to Interpret Whole-Slide Image Analysis Outcomes for Colorectal Polyps", 2017, pages 69-75, proposes a deep-learning-based image analysis approach that not only can accurately classify different types of polyps in whole-slide images, but also generates major regions and features on the slide through a model visualization approach

A need exists for advanced techniques of training ML algorithms to process WSIs. Specifically, a need exists for training ML algorithms segmenting WSIs to detect different tissue types.

This need is met by the features of the independent claims. The features of the dependent claims define embodiments.

Various techniques are based on the finding that accuracy and level of detail required in an annotation protocol for determining an annotation of a WSI can have a significant impact on the effort required for the annotated to prepare the annotation. Techniques are disclosed that facilitate accurate training of ML algorithms while nonetheless annotations of WSIs can have a comparably low level of detail, thus facilitating a fast yet robust annotation protocol

A computer-implemented method of training a segmentation algorithm for digital pathology is disclosed. The segmentation algorithm segmenting a whole-slide image. The whole-slide image depicts tissue of multiple types. Said segmenting is in accordance with the multiple types. The computer-implemented method includes obtaining the whole-slide image and obtaining a first annotation of at least a part of the whole-slide image. The first annotation is for the multiple types. The first annotation has a first level of detail. Based on a first annotation, the computer-implemented method further includes determining a second annotation of the whole-slide image. Also, the second annotation is for the multiple types. The second annotation has a second level of detail which is higher than the first level of detail. The computer-implemented method also includes setting parameters of the segmentation algorithm based on a second annotation.

The first annotation can include multiple labels. Each label may be associated with a respective region in the whole-slide image. Each label may be indicative of a given type of the tissue. For instance, each label may be indicative of a majority type of the tissue in that region. There may be minority types of tissue also present in the respective region, at least to some certain extent.

The second annotation can include multiple labels. Each label may be associated with a respective region in the whole-slide image. Each label may be indicative of a given type of the tissue. For instance, each label may be indicative of a majority type of the tissue in that region. There may be minority types of tissue also present in the respective region, at least to some certain extent.

The second annotation can thus serve as ground truth for setting parameters of the segmentation algorithm. The whole-slide image and the annotations can constitute training data for the training of the segmentation algorithm.

A segmentation result of the segmentation algorithm will thus yield multiple segments/regions of the whole-slide image that are associated with different types of tissue. The segmentation result is at the second level of detail, since the segmentation algorithm is trained based on the second annotation that has the second level of detail.

Since the second annotation has a higher level of detail, the second annotation can be referred to as a "refined annotation".

Said setting of the parameters of the segmentation algorithm can benefit from such higher level of detail of the second annotation. The segmentation algorithm can thereby be trained to deliver segmentation results at the second level of detail.

The level of detail could pertain to a spatial resolution with which labels of the respective annotation resolve different types of the tissue. The level of detail can pertain to the level of accuracy with which the respective annotation discriminates between different types of the tissue. The level of detail of an annotation could pertain to the spatial resolution of contours of respective regions that have assigned there to a respective label that identifies a specific type of a tissue. The level of detail of an annotation could pertain to a maximum ratio or quota of minority types to be included in a given region that has a label assigned thereto indicative of a majority type. The level of detail of an annotation could pertain to a maximum size threshold for which instances of a minority type (e.g., tissue fractions that are associated with a type that is different to the type of the label assigned to the region within which the respective tissue fractions are located) are allowed to exist within a given region to which a label of a majority type is assigned).

According to examples, a training of a classification algorithm is performed based on the first annotation. The classification algorithm is configured to classify image regions of the whole-slide image in accordance with the types. Upon said performing of the further training, the classification algorithm can be used to determine the second annotation.

In other words, the classification algorithm can output labels for the image regions, the labels being indicative of the types of the tissue.

For instance, the image regions could be implemented by patches of a patch grid. The classification algorithm can, accordingly, output, for each patch of the patch grid, a respective label, this label than being indicative of one of the types of the tissue.

Depending on the size of the patches, accordingly, the level of detail of the classification result of the classification algorithm can be comparatively low. Thus, the classification result may not be suited, in all scenarios, to serve as a basis for the setting of the parameters of the segmentation algorithm so that the segmentation algorithm offers a higher level of detail.

According to some examples, a respective class activation map of the classification algorithm can be determined for each one of the image regions of the whole-slide image. Then, the second annotation can be determined based on the class activation map. The class activation map can specify, for each class that can be classified by the classification algorithm - i.e., in other words for each type of the tissue - a relative contribution of specific fractions of each image region. Thus, the class activation map can provide for a localization of features that favor a certain classification result within the respective image region, e.g., within the respective patch. Hence, the class activation map offers a higher level of detail if compared to the classification result.

For instance, it would be possible that labels obtained by the class activation map for certain fractions of each image region are used as ground truth for setting parameters of the segmentation algorithm. In other examples, such level of detail offered by the class activation map may still not be sufficiently large. In such examples, it would be possible to combine image-level features of the whole-slide image with the class activation maps for each image region.

Specifically, it would be possible to determine, based on features of the whole-slide image, a partitioning of the whole-slide image and then perform a pooling operation of the values of the class activation map, for each type of the tissue/for each class, across these partitions of the partitioning. Based on the result of the pooling operation, it is then possible to determine, for each partition of the partitioning, a respective label that is indicative of a particular type of the tissue. These labels can then be used for setting the parameters of the segmentation algorithm. The level of detail of the partitioning of the whole-slide image thus governs the level of detail of the labels that are obtained in such manner; depending on the particular choice of the partitioning algorithm, a high level of detail is possible. At the same time, the accuracy with which the labels are determined can also be high, due to the use of the results from the classification algorithm.

A computer program or a computer-program product or a computer-readable storage medium includes program code. The program code can be loaded and executed by a processor. Upon loading and executing the program code, the processor performs a method of training a segmentation algorithm for digital pathology as disclosed. The segmentation algorithm is configured to segment a whole-slide image. The whole-slide image depicts tissue of multiple types. The computer-implemented method includes obtaining the whole-slide image and obtaining a first annotation of at least a part of the whole-slide image. The first annotation is for the multiple types. The first annotation has a first level of detail. Based on a first annotation, the computer-implemented method further includes determining a second annotation of the whole-slide image. Also, the second annotation is for the multiple types. The second annotation has a second level of detail which is higher than the first level of detail. The computer-implemented method also includes setting parameters of the segmentation algorithm based on a second annotation.

A device includes a processor and a memory. The processor can load and execute program code from the memory. Upon loading and executing the program code, the processor is configured to perform a method of training a segmentation algorithm for digital pathology as disclosed. The segmentation algorithm is configured to segment a whole-slide image. The whole-slide image depicts tissue of multiple types. The computer-implemented method includes obtaining the whole-slide image and obtaining a first annotation of at least a part of the whole-slide image. The first annotation is for the multiple types. The first annotation has a first level of detail. Based on a first annotation, the computer-implemented method further includes determining a second annotation of the whole-slide image. Also, the second annotation is for the multiple types. The second annotation has a second level of detail which is higher than the first level of detail. The computer-implemented method also includes setting parameters of the segmentation algorithm based on a second annotation.

It is to be understood that the features mentioned above and those yet to be explained below may be used not only in the respective combinations indicated, but also in other combinations or in isolation without departing from the scope of the invention.
FIG. 1 schematically illustrates a device according to various examples.
FIG. 2 is a flowchart of a method according to various examples.
FIG. 3 is a flowchart of a method according to various examples.
FIG. 4 schematically illustrates a WSI according to various examples.
FIG. 5 schematically illustrates an initial annotation obtained from a manual annotation process and having a first level of detail according to various examples.
FIG. 6 is a flowchart of a method according to various examples.
FIG. 7 schematically illustrates a grid of patches of a WSI according to various examples.
FIG. 8 schematically illustrates patch-wise classification results of a classification algorithm according to various examples.
FIG. 9 schematically illustrates a class activation map of the classification algorithm according to various examples.
FIG. 10 schematically illustrates a classification result of a classification algorithm according to various examples.

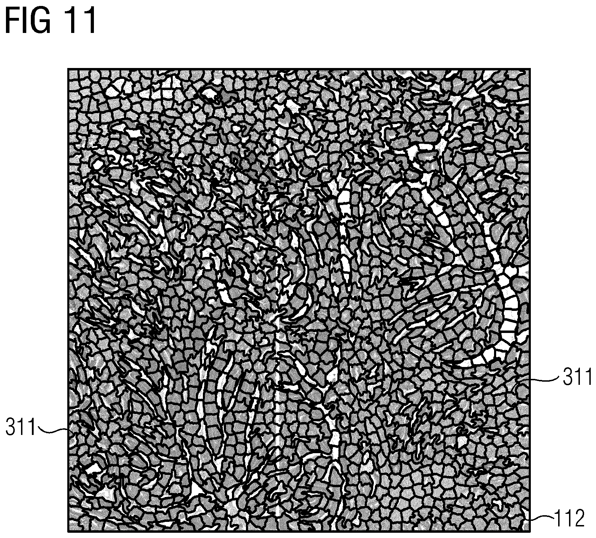

FIG. 11 schematically illustrates super-pixels of a WSI according to various examples.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of digital pathology are described. Input images depicting tissue samples can be processed using an ML algorithm. The ML algorithm can receive an input image and process the input image. An example ML algorithm is a neural network algorithm (NN).

As a general rule, the NN includes multiple layers. The input to a first layer is the input image. Each layer can apply one or more mathematical operations on the input values, e.g., convolutions, nonlinear excitations, pooling operations, to give just a few examples. The input to a layer can be formed by the output of a preceding layer (feed-forward). Feedback of values or skip-connection skipping layers are possible.

The NN for digital pathology can infer at least one semantic histopathology feature. The at least one semantic histopathology feature can describe whether the tissues sample is a manifestation of a disease. It would be possible to segment tissue in an input image, according to various types. Healthy and/or unhealthy tissue may be detected and specifically localized. It would be possible to rate an organ fitness of an organ anatomy in view of tumor growth. A tumor may be graded in accordance with a predefined scale, e.g., to determine a severity. Example semantic histopathology features that could be inferred can be selected from the group consisting of: Gleason scoring, cancer grade/cancer stage estimation, clinical pathway prediction, sub-tumor classification, metastasis evaluation, microsatellite instability (MSI) or stability. For example, a cancer grade can be in accordance with a predefined grading system/scale. Examples would include the Bloom-Richardson score or TNM classification of malignant tumors. Classification systems are available for brain tumors, breast tumors, prostate cancer (Gleason scoring), and other kind of tumors.

The input image received by the ML algorithm could have a size of at least 4.000 x 4.000 pixels, or at least 10.000 x 10.000 pixels, or at least 1E6 x 1E6 pixels. The input image could be a WSI. The input image could be acquired using optical microscopy. The tissue slide for which the input image is acquired can be stained using a chemical stain. Illumination can be used to generate a respective contrast.

Various examples disclosed herein are described in the practical example of an ML algorithm that segments a WSI (ML segmentation algorithm). This means that image regions of the WSI that include tissue of a certain type are delimited by a respective segmentation mask defining the segments. Multiple segments can be determined. Different segments can be associated with tissue of different types.

As a general rule, depending on the scenario, different implementations of such types of tissue to be detected by the ML algorithm are conceivable. For instance, the ML algorithm may segment a WSI to distinguish between a type "cancerous" and another type of non-cancerous" tissue. The other examples possible. For instance, it would be possible to segment a WSI to determine tissue that is infiltrated by immune cells, as a respective type. It would be possible to segment sections of the WSI that do not show tissue altogether, i.e., "no tissue" segments. The particular types of the tissue to be distinguished by the ML algorithm depend on the training of the ML algorithm.

Hereinafter, details of the training of the ML segmentation algorithm will be disclosed. More specifically, techniques are disclosed that facilitate determining a ground truth used for training of the ML segmentation algorithm. Ground-truth labels of an annotation can be used when setting weights of the ML segmentation algorithm.

An annotation can serve as ground truth for the training of the ML segmentation algorithm. The annotation can include ground-truth labels (or, simply, labels) that specify the type of the tissue for certain regions of the WSI. During the training of the ML segmentation algorithm, based on a loss function that compares the output of the ML segmentation algorithm with the labels of the annotation, the parameters of the ML segmentation algorithm can be adjusted so as to minimize a difference between the output of the ML segmentation algorithm and the labels of the annotation. Various training techniques are generally known, e.g., backpropagation using a gradient-descent type of optimization, so that further techniques of the training itself are not required to be described in this context.

Due to the size of WSIs, determining an annotation of the WSI for training a ML segmentation algorithm can be a difficult task. Specifically, to determine annotations at a high level of detail, e.g., pixel level, is not practical due to the size of the WSI.

Various examples disclosed herein are based on the finding that the task of generating a ground truth for training of an ML segmentation algorithm that can operate based on WSIs can be implemented based on a concept that may be referred to as "patch-wise weak supervision". The general concept of weak supervision is known in other contexts than digital pathology; e.g., image-level annotations are known to serve as a starting point for training a in ML segmentation algorithm to segment the pixels contributing to the class defined by the image-level annotation. To give a concrete example, an image (e.g., a photography) may either depict a cat or a dog; a respective information may be available as part of an annotation. The annotation may not resolve the particular parts of the image that depict the cat or the dog. In other words, the annotation may be a 1-bit annotation, where, e.g., "1" identifies that a cat is depicted while "0" identifies that a dog is depicted. Then, using techniques of "weak supervision", and ML segmentation algorithm may be trained to segment pixels that either show the cat or the dog, taking this 1-bit annotation as ground truth.

An example "weak supervision" of training a segmentation algorithm is disclosed in Wang, Xi, et al. "Weakly supervised deep learning for whole slide lung cancer image analysis." IEEE transactions on cybernetics 50.9 (2019): 3950-3962. Also see Izadyyazdanabadi, Mohammadhassan, et al. "Weakly-supervised learning-based feature localization for confocal laser endomicroscopy glioma images." International Conference on Medical Image Computing and Computer-Assisted Intervention. Springer, Cham, 2018.

On the other hand, WSIs include a significant higher amount of information if compared to such natural images where techniques of weak supervision of training of a segmentation algorithm have been previously employed. This means that, e.g., different types of tissue can occur at different areas of the WSI, such that it is not possible to assign a global label (e.g., cancerous or non-cancerous tissue) to the WSI.

According to various examples, it is possible to refine and annotation, i.e., obtain a first annotation that has a first level of detail (initial annotation) and, based on this initial annotation, determine a second annotation (refined annotation) of the WSI that has a second level of detail which is higher than the first level of detail.

By such techniques, it is possible to reduce the efforts for the annotation process that is used to determine the initial annotation. In other words, the ground truth for performing the training of the segmentation algorithm can be determined comparably fast.

As a general rule, the term "level of detail" as used herein can pertain to a spatial resolution with which borders of labels of an annotation are defined. For instance, at a low level of detail a edge points of a polyline delimitating areas associated with a given label may be spaced apart by a larger distance than for a high level of detail. Alternatively or additionally, "level of detail" could pertain to a size threshold below which structures are neglected. For instance, considering an area that is associated with the label "non-cancerous tissue" may include small cancerous structures below a size threshold. Alternatively or additionally, "level of detail" could pertain to a maximum count of structures/tissue fractions of minority type in an area; e.g., considering an area that is associated with the label "non-cancerous tissue", such area may include cancerous tissue instances up to a certain quota.

Various techniques are based on the finding that such refinement of the initial annotation to obtain the refined annotation having a higher level of detail is, in particular, possible if one or more constraints are observed in the annotation protocol used for determining the initial annotation. In other words, the refinement is facilitated by a ruleset to be obeyed by the annotator, e.g., the pathologist.

Some examples for such these constraints for the first annotation are summarized below in TAB. 1.

**TAB. 1: Various examples of constraints of the annotation that is determined in a manual annotation process.**

| | Brief description | Example details |
|---|---|---|
| I | Exclusive labels | The labels can annotate that a certain region of the WSI is associated with a certain type of the tissue. The annotation can observe the constraint that there may not be any regions of the WSI that are associated with multiple types of the tissue in the annotation. |
| II | Tight labels | Tight labels are labels for which the borders do not strike parts of other larger tissue areas and should not include structures that are larger than said size of any other tissue. |
| III | Threshold of scale | The idea is to define a rough threshold of scale beyond which the annotator does not "care". E.g., a region of tumor cells may have immune cells, blood vessels, connective tissue etc. throughout. While these cells are not strictly cancer cells, they shall be ignored by the annotator up to a defined size. |
| | | More generally, any given region of the WSI having a label of the first annotation that is associated with a first type shall not include other types beyond a predetermined quota and/or larger than a predetermined size threshold. |
| | | Thus, an initial level of detail is guaranteed to be smaller than a threshold of scale. |

Using such constraints as in TAB. 1 helps to facilitate an efficient annotation process. For instance, by obeying the constraint listed in TAB. 1: example III, i.e., a certain scale threshold, annotation can be implemented comparably fast due the associated low level of detail. This is because the different labels can cover large sections of the WSI where at least up to a certain level of detail only tissue of a given type is present; tissue of other types may also be present, as long as the respective quota is not exceeded and/or the tissue size of the respective instances of the tissue of the other types does not exceed the threshold of scale.

Furthermore, by using such techniques, it is possible that the initial annotation is restricted to a fraction of the WSI. The refined annotation that is determined based on the initial annotation can nonetheless cover the entire WSI. Thus, a partial initial annotation can be extended to cover the entire WSI. Such techniques are based on the finding that it is sometimes better to determine the annotation for a few examples, e.g., thereby covering different WSIs, rather than annotating everything in only a single or a few WSIs.

As a general rule, various techniques are conceivable for determining the refined annotation based on the initial annotation. According to various examples, it would be possible to employ patch-wise weak supervision. There are various techniques known in the art to implement image-level weak supervision. It would be possible to use such techniques that are generally known in the art to operate on image level to operate on patch level. Specifically, the overall WSI can be broken down into multiple patches. It would then be possible to implement the respective weak supervision for determining the refined annotation based on the label provided by the initial annotation at that respective patch.

For instance, based on the initial annotation, a training of a classification algorithm may be performed. The classification algorithm can be configured to classify image regions, e.g., patches, of the WSI in accordance with the types indicated by the initial annotation. I.e., classes of the classification result correspond to types to-be-segmented by the ML segmentation algorithm. Then, upon said performing of the training of the classification algorithm, the classification algorithm can be used to determine the refined annotation. Here, in one technique, a class activation map (CAM) of the classification algorithm may be determined for the image regions, e.g., the patches, of the WSI. Then, the refined annotation can be determined based on the CAM.

It would be possible to employ a CNN as classification algorithm. For instance, ResNet-18 may be used, see Ayyachamy, Swarnambiga, et al. "Medical image retrieval using Resnet-18." Medical Imaging 2019*:* Imaging Informatics for Healthcare, Research, and Applications. Vol. 10954. International Society for Optics and Photonics, 2019. A VGG-16 or VGG-19 CNN could be used, see: Mateen, Muhammad, et al. "Fundus image classification using VGG-19 architecture with PCA and SVD." Symmetry 11.1 (2019): 1; or Kaur, Taranjit, and Ta-pan Kumar Gandhi. "Automated brain image classification based on VGG-16 and transfer learning." 2019 International Conference on Information Technology (ICIT). IEEE, 2019.

Typically, in such architectures of a CNN, a fully connected layer is the output layer, preceded by a pooling layer. The pooling layer is preceded by multiple convolutional layers. There may be skip connections. The CAM may be the input feature map to the pooling layer preceding the fully-connected layer. Accordingly, the CAM typically has a comparably higher level of detail if compared to the patch-wise classification result. The CAM can have a higher level of detail if compared with the initial annotation.

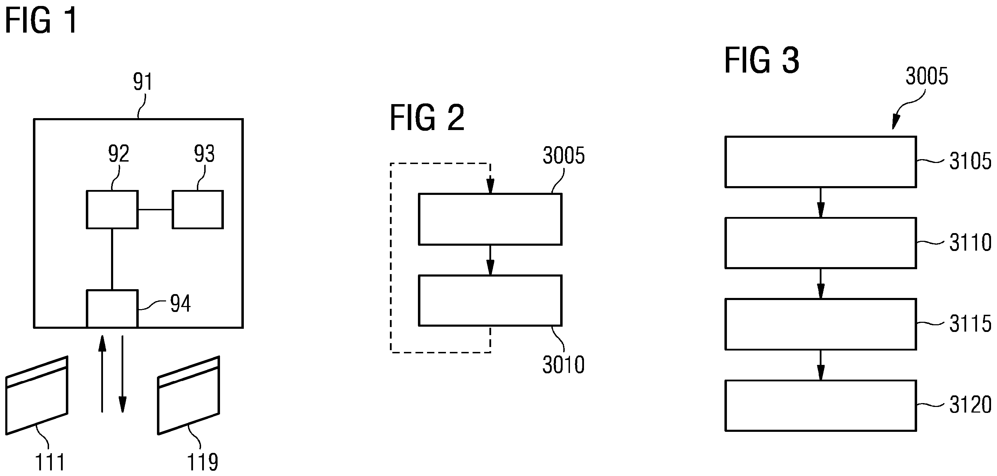

FIG. 1 schematically illustrates a device 91 according to various examples. The device 91 includes a processor 92 that is coupled to a memory 93. The processor 92 can load program code from the memory 93. The processor 92 can execute the program code. The processor 92 can also communicate with other devices and/or databases via an interface 94. For instance, the processor 92 could receive a WSI 111 via the interface 94 for subsequent processing of the WSI. The processor 92 could output semantic information 119 associated with the WSI 111 and obtained from said processing of the WSI via the interface 94. The semantic information 119 could, e.g., include a segmentation result of an ML segmentation algorithm that has been previously trained. Based on such segmentation result, tumor-type tissue could be detected in a WSI.

The processor 92, upon loading and executing the program code, could perform techniques as described herein, e.g.: training of an ML algorithm; performing an annotation process for determining annotations of a WSI; determining a ground truth for a training of an ML algorithm; refining an annotation; setting parameters of a NN, e.g., using backpropagation or another training optimization minimizing a loss value of a loss function; performing techniques of weakly supervised segmentation; inferring semantic features based on WSIs without ground truth being available; etc.

FIG. 2 is a flowchart of a method according to various examples. For instance, the method according to FIG. 2 could be executed by a processor upon loading program code from a memory. For example, the method according to FIG. 2 could be executed by the processor 92 of the device 91 upon loading program code from the memory 93 and upon executing the program code.

At box 3005, and ML segmentation algorithm for digital pathology is trained. This includes setting parameters of the ML segmentation algorithm. Backpropagation can be used. The parameters are set based on ground truth. The training at box 3005 can also include obtaining the ground truth. For instance, an initial annotation of a WSI can be obtained and refined, to obtain a refined annotation based on which parameters are then set. An annotation process can be executed to obtain the initial annotation. Techniques of patch-wise weakly supervised training can be used in order to determine the refined annotation.

At box 3010, the trained ML segmentation algorithm is used for inference tasks as part of digital pathology. This means that one or more further WSIs may be obtained. Then, these one or more further WSIs may be input to the ML segmentation algorithm to thereby obtain segmentation results. Ground truth may not be available for the one or more further WSIs. Based on these segmentation results, it would be possible to detect tumor-type tissue in the one or more further WSIs.

It would be possible to execute a re-training of the ML segmentation algorithm from time to time, as indicated by the dashed arrow in FIG. 2.

FIG. 3 is a flowchart of a method according to various examples. For instance, the method of FIG. 3 may be executed by a processor such as the processor 92 of the device 91 according to FIG. 1. The method of FIG. 3 pertains to training and ML segmentation algorithm for digital pathology that operates based on WSIs. As such, the method of FIG. 3 can implement box 3005 of the method according to FIG. 2.

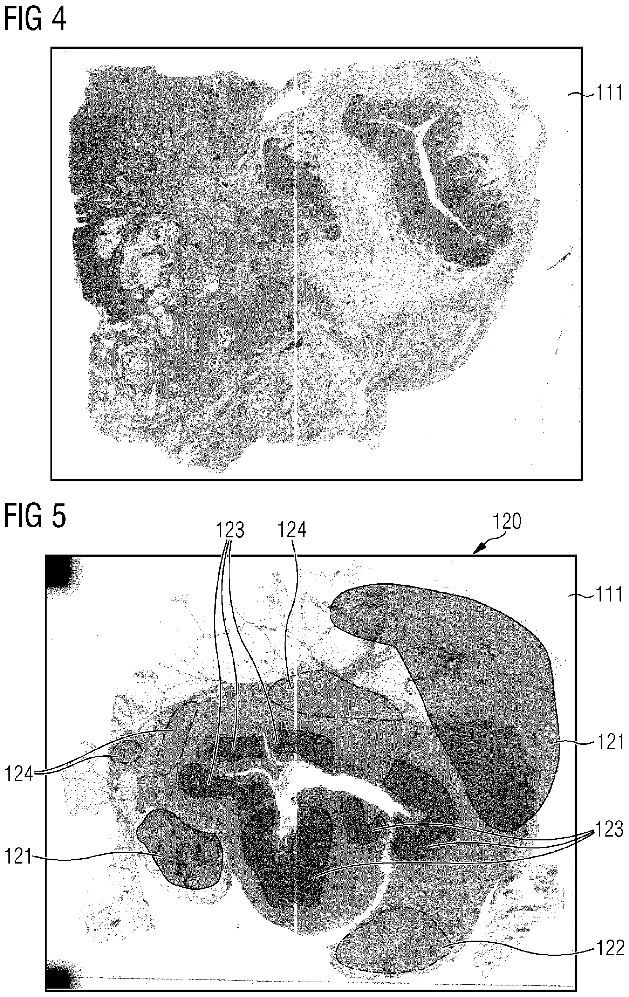

At box 3105, a WSI is obtained (cf. FIG. 4, where an example WSI 111 is shown). For example, the WSI may be loaded from a picture archiving system or another database. The WSI may be acquired using a microscope, e.g., in a laboratory process. The WSI may be acquired using various imaging modalities, e.g., fluorescence of stained tissue samples or tissue slides, etc.

At box 3110, an initial annotation (first annotation) of at least a part of the WSI is obtained (cf. FIG. 5, where the annotation 120 including labels 121-124 for different types of tissue is shown for the WSI 111 of FIG. 4). The initial annotation is for multiple tissue types, i.e., defines labels for each type. The labels can pertain to regions that are delineated by polylines.

The initial annotation has a first level of detail.

For instance, the initial annotation may be obtained from an annotation process that interacts with a user. For instance, the initial annotation may obey one or more constraints such as those constraints as listed in TAB. 1.

It would be possible that the initial annotation only covers a fraction of the overall WSI.

The first level of detail may pertain to a certain accuracy with which the initial annotation is determined. For instance, the initial level of detail may specify a spatial resolution of boundaries of regions associated with a common label. For instance, these boundaries may not be specified with the resolution on pixel level. For instance, the initial level of detail may allow for a certain quota and/or for certain small-sized tissue fractions or segments (i.e., pieces of tissue) of deviating type, i.e., minority types within an area of the region that is associated with a majority type.

Then, at box 3115, a refined annotation of the WSI is determined based on the initial annotation. The refined annotation is also for the multiple types of the tissue. The refined annotation has a second level of detail that is higher than the first level of detail.

For instance, at the second level of detail, a size threshold and/or a quota of minority type instances may be smaller than for the first level of detail.

At box 3120, parameters of the ML segmentation algorithm can be set based on the refined annotation is obtained from box 3115. The refined annotation is obtained from box 3115 can thus serve as the ground truth used for the training process of the ML segmentation algorithm.

Next, details with respect to an example implementation of box 3115 will be explained.

Box 3115 may employ techniques of patch-wise weak supervision of a training of a respective ML algorithm that is used to determine the refined annotation. I.e., it is possible to determine a grid of patches, e.g., a Cartesian grid of patches that all have the same size.

The size of the patches can correlate with size thresholds used in connection with constraints for the first annotation. For instance, where a level of detail is defined on a certain length scale, then the size of the patches can have the same length in accordance with the length scale. To give a concrete example, each such patch is then guaranteed to contain enough relevant tissue for that label even if there are also tissue of other types present, e.g., immune cells, blood vessels, connective tissue etc. present in that patch.

For instance, for each patch, a technique that is based on the general disclosure of Izadyyazdanabadi, Mohammadhassan, et al. "Weakly-supervised learning-based feature localization for confocal laser endomicroscopy glioma images." International Conference on Medical Image Computing and Computer-Assisted Intervention. Springer, Cham, 2018 could be employed. It would be possible to use a technique as described generally in Wang, Xi, et al. "Weakly supervised deep learning for whole slide lung cancer image analysis." IEEE transactions on cybernetics 50.9 (2019): 3950-3962.

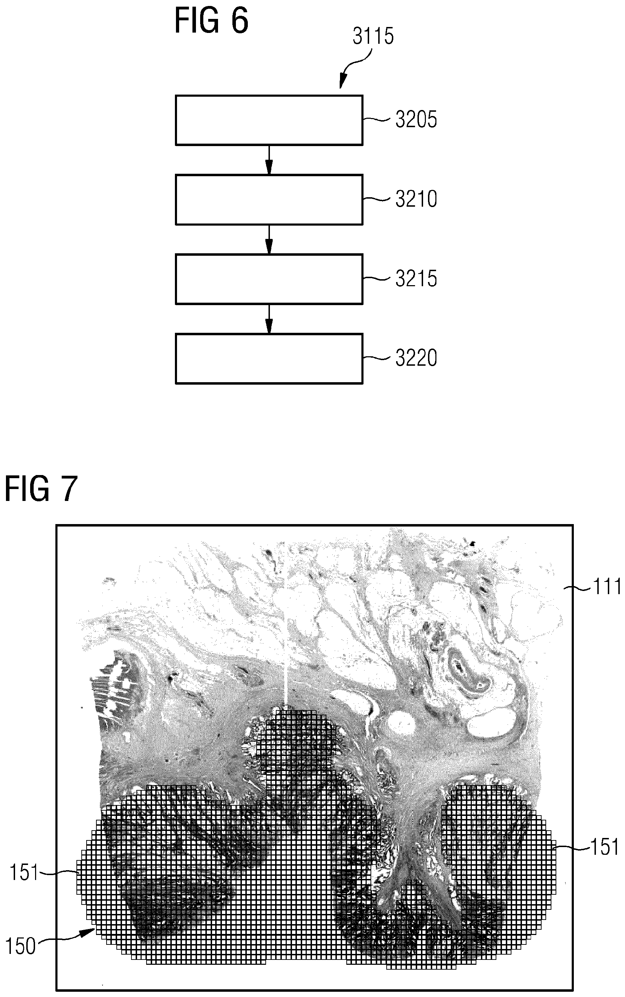

Next, a concrete implementation of box 3115 will be disclosed in connection with FIG. 6.

FIG. 6 is a flowchart of a method according to various examples. The method of FIG. 6 generally pertains to refining an annotation that has a first level of detail, to thereby obtain a further annotation that has a second level of detail which is higher than the first level of detail. The initial annotation can be used to determine the refined annotation. The method of FIG. 6 thus corresponds to obtaining ground truth for a training process for setting parameters of an ML algorithm, e.g., and ML segmentation algorithm to operate based on WSIs for digital pathology. The method of FIG. 6 can, in particular, employs techniques that pertain to patch-based weak supervision of training an ML segmentation algorithm. The method of FIG. 6 can implement box 3115 of the method of FIG. 3.

At box 3205, based on the initial annotation, a training of a classification algorithm is executed. The classification algorithm is configured to classify image regions of the WSI in accordance with different types of tissue. For instance, these image regions could be implemented by patches of a patch grid.

Referring to FIG. 7, there is illustrated an example grid 150 of patches 151 for the WSI 111 that is also depicted in FIG. 4. These patches 151 have a side length that equates to a size threshold below which minority type instances need not to be considered by the annotator in the annotation process, cf. TAB. 1, example III.

To give an example, FIG. 7 illustrates patches 151 that are associated with the labels of the initial annotation pertaining to "tumor cells" label 123 and "no tumor cells" label 122 and "healty tissue" label 121.

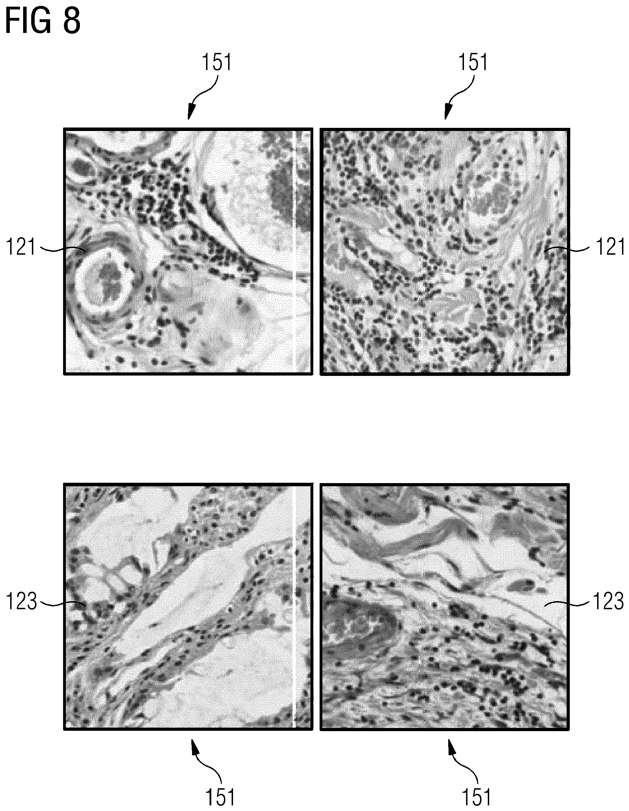

Now, again referring to FIG. 6, at box 3210, a CAM of the classification algorithm is determined for these image regions, e.g., the patches, of the WSI (cf. FIG. 8 where a CAM (CAM) 212 is shown for the WSI 111 that is also depicted in FIG. 4).

A CAM provides discriminative regions from a CNN, each region being associated with a specific class. The CAM identifies which regions of a patch contribute to the overall classification result of that patch.

This CAM can have a certain level of detail that is smaller than the intended level of detail of the refined annotation. For instance, the class activation map can have a comparably low level of detail, e.g., can have a comparably low spatial resolution. The spatial resolution of the class activation map can, in particular, stay behind the intended level of detail for the refined annotation. Thus, hereinafter, techniques will be described which facilitate increasing the level of detail beyond the inherent level of detail of the class activation map, to thereby obtain the refined annotation at the higher level of detail.

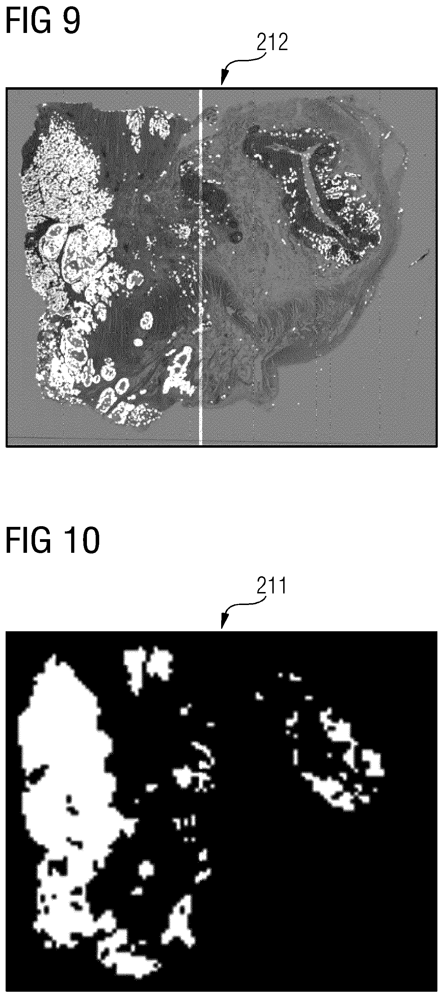

It is noted that the level of detail of the CAM can be larger than the level of detail of the classification result that is provided by the classification algorithm (cf. FIG. 9 where the classification result 211 is shown). Thus, while the level of detail of the class activation map still does not have the desired high value, can still be larger than the classification result of the classification algorithm.

Thus, to further increase the level of detail beyond the level of detail offered by the CAM, it is possible to rely on, both, the CAM as well as further features of the WSI that are extracted from the WSI. To give an example, it would be possible to consider color of the WSI pixel and/or contrast gradient of the WSI, as example features. Thus, image-level features of the WSI can be considered. The refined annotation can thus be determined based on such features and the CAM at box 3220.

By combining such image-level features of the whole slide image with the class activation map, it is possible to further increase the level of detail. For instance, variations of the class activation map can be correlated with variations of the image-level features; so that the level of detail corresponds to the length scale of the variation of the image-level features.

The features can be extracted as an unsupervised over-segmentation, such as Linear Spectral Clustering.

A partitioning or over-segmentation of the WSI would be possible. In other words, based on such features, it would be possible to determine multiple partitions of the WSI. For instance, it would be possible to determine partitions of the partitioning such that each partition of the partitioning includes a comparably small variation of respective features; for instance, each partition can include pixels of the whole slide image that do not have a significant variance in color or contrast. It would be possible that adjacent partitions are delimited at positions where the contrast gradient exceeds a certain threshold.

It is then possible to assign labels of the refined annotation to each partition of the partitioning, taking into account the CAM; so that the level of detail of the refined annotation corresponds to the level of detail of the partitioning. Thereby, the level of detail of the refined annotation can be increased beyond the level of detail of the class activation map.

Various options are available to determine such partitioning, e.g., depending on the particular choice of the features that govern the determination of the partitions. One specific example of such partitioning would be determination of super-pixels. In other words, the CAM is propagated to super-pixel level.

For instance, the features may be extracted to thereby obtain super-pixels of the WSI that have a common image contrast (cf. FIG. 10 where super-pixels 311 are shown for a certain part 112 of the WSI 111). Thus, super-pixels can be delimited along areas of a large contrast gradient of the pixel values of the WSI.

Then, to obtain the label of the refined annotation for a given super-pixel, it would be possible to determine the median of the CAM across those super-pixels. More generally, it would be possible that the refined annotation is determined based on a pooling of values of the CAM across the partitions of a partitioning, for each type of tissue.

In one scenario, such pooling - to obtain the label of the refined annotation for a given partition - could include an integration of the values of the CAM for a particular class over the area of individual partitions of the partitioning, e.g., across individual super-pixels. A class is assigned to each partition, e.g., super-pixel, based on the maximum inte-grand of individual classes. This equates to determining labels of the refined annotation.

Thus, in other words and summarizing, the initial annotation may be refined using a patch-based classification network. Patches are generated from the first annotation - cf. box 3110 - by extracting image regions of certain size that contain a majority of mask pixels of one specific label of the initial annotation. That label is then essentially image-level for the given patch.

Optionally, a visual similarity of partitions, e.g., super-pixels, can be used to find a visually meaningful subset of partitions for each class, e.g., with graph-based methods. Such techniques are based on the finding that a shape and number of the partitions control the shape of the labels of the second annotation, as well as their reliability. For example, one might choose roughly a quarter of the number of pixels in the CAM to get an averaging effect over the area of a given partition of the WSI. Note that the accuracy of the second annotation can be considerably higher even if the number of partitions is lower than the number of CAM pixels. This is because the fine contours of a larger clearly delineated area will be extracted, i.e., the contours follow the image content (the partitions are determined based on features of the image / the image content).

Next, such propagation of the CAM to super-pixel level is explained in practical terms: the class activation map could be seen as a low-resolution image. The super-pixels correspond to a partitioning wherein each super-pixel includes multiple pixels of the underlying image (and, as such, may be assumed to have a low-resolution); however, accordingly, the contours of the super-pixels are defined at a high resolution so that the super-pixels can capture a comparably high level of detail of the underlying image. Specifically, the label of the refined annotation defined for a given super-pixel can correspond to the class indicated by the class activation map for a given region that only covers a fraction of that given super-pixel; accordingly, a so-called "spill-out" effect can be observed where the majority class of the CAM in a given region also has an impact on areas surrounding that region, due to the geometry of the respective super-pixel. Partial-area effects that may otherwise result from the comparatively low resolution of the classification result of the classification algorithm or the comparatively low resolution of the class activation map of the classification algorithm may be avoided by making binary decisions for the label to be assigned to a given super-pixel, and by relying on the high-resolution pixel-level contours of the super-pixels. The practical explanations provided above also apply to other types of partition-ings, other than super-pixels.

It would be optionally possible to filter labels of the refined annotation based on one or more predetermined criteria. For instance, for each super-pixel, it could be checked whether the super-pixel depicts tissue at all. Where there is no tissue, then it would be possible to assign a respective label, e.g., "background" label or at least a "non-tumor" type. For the CAM super-pixels, it would be possible to remove labels that pertain to "tumor cell" or annotate "no tumor cell".

Specifically, by using such techniques once the classification algorithm has been trained in box 3205 based on the initial annotation, it is possible to determine the CAM in box 3210 even for fractions of the WSI for which no labels of the initial annotation are available. Thus, image regions of the WSI for which the CAM is determined can be at least partially outside the fraction of the WSI that is covered by the first annotation.

Thus, the second annotation can include fractions of the WSI that were not originally annotated in the first annotation. This is true because the initial patch-classification plus refinement model can be applied to areas that were not part of the initial training. A larger portion of the WSIs can this be used for training the ML segmentation algorithm

Summarizing, techniques have been disclosed that can be built into a standard ML segmentation algorithm as a kind of "prior". The disclosed refinement of a low-detail annotation to yield a refined high-detail annotation can be understood as a filter on the input training data during training of any supervised ML segmentation algorithms. Thus, this may be referred to as "shape prior" for the annotation.

Further summarizing, specifically techniques have been described of using an annotation protocol for defining labels of a first annotation as exclusive and tight regions but only up to a certain accuracy (scale). The first annotation may only include labels for some regions of a WSI, but not the entire WSI. The first annotation can thus have a defined accuracy at a scale that makes the task feasible and maximizes variability; i.e., partially annotating many WSIs rather than a few WSIs completely.

Then, the first annotation can be refined using a patch classification provided by a classification algorithm. Thereby, a second annotation of the WSI is obtained and can be used as ground truth for setting parameters of an ML segmentation algorithm.

In some scenarios, such refinement of the first annotation is based on a CAM, to obtain a higher level of detail if compared to the first annotation, i.e., a larger spatial resolution than patch size of patches on which the classification algorithm operates.

To address the still comparatively low level of detail of the CAM, it is possible to incorporate local image information such as gradient of the WSI. For example, it would be possible to use an unsupervised over-segmentation of the WSI, such as super-pixels or another partitioning. The refined, second annotation can then be obtained at a level of detailed defined by the feature size of the partitions of the partitioning.

An ML segmentation algorithm that is trained based on the refined, second annotation can then be used in inference, i.e., to make prediction without ground truth being available.

The disclosed techniques are based on the finding that for some tasks - e.g., estimating tumor content in percent - the level of detail of the initial, first annotation may suffice; but that there are other tasks - e.g., detection and delineation of a tumor - that require higher level of detail for the ground truth.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, while various examples have been disclosed in the context of training an ML segmentation algorithm in the context of digital pathology for processing WSIs, similar techniques may also be employed for other images. Specifically, use cases can benefit where comparably large images including a large amount of pixels, e.g., more than a million pixels or even more than 10,000,000 pixels are processed. Here, patch -wise week supervised training of an ML segmentation algorithm can be helpful. Examples would include aerial photography and satellite images, as well as telescope data.

## Claims

1. A computer-implemented method of training a segmentation algorithm for digital pathology, the segmentation algorithm to segmenting a whole-slide image (111) depicting tissue of multiple types in accordance with the multiple types,
wherein the computer-implemented method comprises:
- obtaining the whole-slide image,
- obtaining a first annotation (120) of at least a part of the whole-slide image and for the multiple types, the first annotation having a first level of detail,
- based on the first annotation, determining a second annotation of the whole-slide image and for the multiple types, the second annotation having a second level of detail which is higher than the first level of detail, and
- setting parameters of the segmentation algorithm based on the second annotation so as to train the segmentation algorithm to deliver segmentation results at the second level of detail,
wherein the step of determining the second annotation based on the first annotation comprises:
- based on the first annotation, performing a patch-wise weak supervision of a training of a classification algorithm configured to classify patches of the whole-slide image in accordance with the types,
- determining class activation maps of the classification algorithm for the patches of the whole-slide image,
- extracting, at the second level of detail, features from the whole-slide image,
- determining, based on the features extracted from the whole-slide image, a partitioning of the whole-slide image, and
wherein the second annotation is determined based on a pooling of values of the class activation maps for each type across partitions of the partitioning.

2. The computer-implemented method of claim 1,
wherein the class activation maps have a third level of detail which is smaller than the second level of detail.

3. The computer-implemented method of claim 1 or 2,
wherein the features comprise at least one of a color or a contrast gradient.

4. The computer-implemented method of claim 1 or 3,
wherein the partitioning comprises super-pixels of the whole-slide image.

5. The computer-implemented method of any one of claims 1 to 4,
wherein the first annotation is restricted to a fraction of the whole-slide image,
wherein the patches of the whole-slide image for which the class activation maps are determined are at least partially outside of the fraction of the whole-slide image.

6. The computer-implemented method of any one of claims 1 to 5,
wherein any given patch of the whole-slide image having a label of the first annotation that is associated with a first type of the multiple types does not include tissue fractions of other types of the multiple types larger than a predetermined size threshold,
wherein a length scale of the patches corresponds to the predetermined size threshold.

7. The computer-implemented method of any one of the preceding claims,
wherein the first annotation is restricted to a fraction of the whole-slide image,
wherein the second annotation covers the entire whole-slide image.

8. The computer-implemented method of any one of the preceding claims,
wherein the first annotation is obtained from a manual annotation process.

9. The computer-implemented method of any one of the preceding claims,
wherein any given patch of the whole-slide image having a label of the first annotation that is associated with a first type of the multiple types does not include tissue fractions of other types of the multiple types beyond at least one of a predetermined quota or larger than a predetermined size threshold.

10. The computer-implemented method of any one of the preceding claims, further comprising:
- obtaining a further whole-slide image,
- determining a segmentation result using the segmentation algorithm for the further whole-slide image, and
- based on the segmentation result, detecting tumor-type tissue in the further whole-slide image.

## Patentansprüche

1. Computerimplementiertes Verfahren zum Trainieren eines Segmentierungsalgorithmus für die digitale Pathologie, wobei der Segmentierungsalgorithmus ein Whole-Slide-Bild (Aufnahme eines ganzen Objektträgers, 111) segmentieren soll, das Gewebe mehrerer Typen in Übereinstimmung mit den mehreren Typen darstellt,
wobei das computerimplementierte Verfahren umfasst:
- Beziehen des Whole-Slide-Bildes,
- Beziehen einer ersten Annotation (120) wenigstens eines Teils des Whole-Slide-Bildes und für die mehreren Typen, wobei die erste Annotation einen ersten Detailgrad aufweist,
- basierend auf der ersten Annotation, Bestimmen einer zweiten Annotation des Whole-Slide-Bildes und für die mehreren Typen, wobei die zweite Annotation einen zweiten Detailgrad aufweist, der höher als der erste Detailgrad ist, und
- Einstellen von Parametern des Segmentierungsalgorithmus basierend auf der zweiten Annotation, um den Segmentierungsalgorithmus dafür zu trainieren, Segmentierungsergebnisse mit dem zweiten Detailgrad zu liefern, wobei der Schritt des Bestimmens der zweiten Annotation basierend auf der ersten Annotation umfasst:
- basierend auf der ersten Annotation, Durchführen einer patchweisen schwachen Überwachung eines Trainings eines Klassifizierungsalgorithmus, der dazu ausgelegt ist, Patches des Whole-Slide-Bildes in Übereinstimmung mit den Typen zu klassifizieren,
- Bestimmen von Klassenaktivierungskarten des Klassifizierungsalgorithmus für die Patches des Whole-Slide-Bildes,
- Extrahieren, mit dem zweiten Detailgrad, von Merkmalen aus dem Whole-Slide-Bild,
- Bestimmen, basierend auf den Merkmalen, die aus dem Whole-Slide-Bild extrahiert werden, einer Partitionierung des Whole-Slide-Bildes und
wobei die zweite Annotation basierend auf einem Pooling von Werten der Klassenaktivierungskarten für jeden Typ über Partitionen der Partitionierung hinweg bestimmt wird.

2. Computerimplementiertes Verfahren nach Anspruch 1,
wobei die Klassenaktivierungskarten einen dritten Detailgrad aufweisen, der kleiner als der zweite Detailgrad ist.

3. Computerimplementiertes Verfahren nach Anspruch 1 oder 2, wobei die Merkmale wenigstens eines von einer Farbe oder einem Kontrastgradienten umfassen.

4. Computerimplementiertes Verfahren nach Anspruch 1 oder 3, wobei das Partitionieren Superpixel des Whole-Slide-Bildes umfasst.

5. Computerimplementiertes Verfahren nach einem der Ansprüche 1 bis 4,
wobei die erste Annotation auf einen Teilbereich des Whole-Slide-Bildes beschränkt ist,
wobei die Patches des Whole-Slide-Bildes, für das die Klassenaktivierungskarten bestimmt werden, wenigstens teilweise außerhalb des Teilbereichs des Whole-Slide-Bildes liegen.

6. Computerimplementiertes Verfahren nach einem der Ansprüche 1 bis 5,
wobei jeder gegebene Patch des Whole-Slide-Bildes, der eine Beschriftung der ersten Annotation aufweist, die mit einem ersten Typ der mehreren Typen verknüpft ist, keine Gewebeteilbereiche anderer Typen der mehreren Typen beinhaltet, die größer als ein vorbestimmter Größenschwellwert sind,
wobei eine Längenskala der Patches dem vorbestimmten Größenschwellwert entspricht.

7. Computerimplementiertes Verfahren nach einem der vorhergehenden Ansprüche,
wobei die erste Annotation auf einen Teilbereich des Whole-Slide-Bildes beschränkt ist,
wobei die zweite Annotation das gesamte Whole-Slide-Bild abdeckt.

8. Computerimplementiertes Verfahren nach einem der vorhergehenden Ansprüche,
wobei die erste Annotation von einem manuellen Annotationsprozess bezogen wird.

9. Computerimplementiertes Verfahren nach einem der vorhergehenden Ansprüche,
wobei jeder gegebene Patch des Whole-Slide-Bildes, der eine Beschriftung der ersten Annotation aufweist, die mit einem ersten Typ der mehreren Typen verknüpft ist, keine Gewebeteilbereiche anderer Typen der mehreren Typen beinhaltet, die wenigstens über eine vorbestimmten Quote hinausgehen oder größer als ein vorbestimmter Größenschwellwert sind.

10. Computerimplementiertes Verfahren nach einem der vorhergehenden Ansprüche, ferner umfassend:
- Beziehen eines weiteren Whole-Slide-Bildes,
- Bestimmen eines Segmentierungsergebnisses unter Verwendung des Segmentierungsalgorithmus für das weitere Whole-Slide-Bild und
- basierend auf dem Segmentierungsergebnis, Detektieren von tumorartigem Gewebe in dem weiteren Whole-Slide-Bild.

## Revendications

1. Un procédé mis en œuvre par ordinateur d'entraînement d'un algorithme de segmentation pour la pathologie numérique, l'algorithme de segmentation segmentant une image (111) plein champ dépeignant du tissu de type multiple suivant les types multiples,
dans lequel le procédé mis en œuvre par ordinateur comprend :
- obtenir l'image plein champ,
- obtenir une première annotation (120) d'au moins une partie de l'image plein champ et pour les types multiples, la première annotation ayant un premier niveau de détail,
- sur la base de la première annotation, déterminer une deuxième annotation de l'image plein champ et pour les types multiples, la deuxième annotation ayant un deuxième niveau de détail, qui est plus haut que le premier niveau de détail, et
- régler des paramètres de l'algorithme de segmentation sur la base de la deuxième annotation, de manière à entraîner l'algorithme de segmentation à donner des résultats de segmentation au deuxième niveau de détail,
dans lequel le stade de détermination de la deuxième annotation sur la base de la première annotation comprend :
- sur la base de la première annotation, effectuer une supervision faible pièce par pièce d'un entraînement d'un algorithme de classification configuré pour classer des pièces de l'image plein champ suivant les types,
- déterminer des topographies d'activation de classe de l'algorithme de classification pour les pièces de l'image plein champ,
- extraire, au deuxième niveau de détail, des caractéristiques de l'image plein champ,
- déterminer, sur la base des caractéristiques extraites de l'image plein champ, un partitionnement de l'image plein champ, et
dans lequel la deuxième annotation est déterminée sur la base d'un regroupement de valeurs des topographies d'activation de classe pour chaque type dans des partitions du partitionnement.

2. Le procédé mis en œuvre par ordinateur de la revendication 1,
dans lequel les topographies d'activation de classe ont un troisième niveau de détail, qui est plus bas que le deuxième niveau de détail.

3. Le procédé mis en œuvre par ordinateur de la revendication 1 ou 2,
dans lequel les caractéristiques comprennent au moins l'un d'une couleur ou d'un gradient de contraste.

4. Le procédé mis en œuvre par ordinateur de la revendication 1 ou 3,
dans lequel le partitionnement comprend des super pixels de l'image plein champ.

5. Le procédé mis en œuvre par ordinateur de l'une quelconque des revendications 1 à 4,
dans lequel la première annotation est restreinte à une fraction de l'image plein champ,
dans lequel les pièces de l'image plein champ, pour lesquelles les topographies d'activation de classe sont déterminées, sont au moins en partie en dehors de la fraction de l'image plein champ.

6. Le procédé mis en œuvre par ordinateur de l'une quelconque des revendications 1 à 5,
dans lequel toutes pièces données de l'image plein champ ayant une étiquette de la première annotation, qui est associée à un premier type du type multiple, n'inclut pas des fractions de tissu d'autres types du type multiple plus grandes qu'un seuil de dimension déterminé à l'avance,
dans lequel une échelle de longueur des pièces correspond au seuil de dimension déterminé à l'avance.

7. Le procédé mis en œuvre par ordinateur de l'une quelconque des revendications précédentes,
dans lequel la première annotation est restreinte à une fraction de l'image plein champ,
dans lequel la deuxième annotation recouvre toute l'image plein champ.

8. Le procédé mis en œuvre par ordinateur de l'une quelconque des revendications précédentes,
dans lequel la première annotation est obtenue à partir d'une opération manuelle d'annotation.

9. Le procédé mis en œuvre par ordinateur de l'une quelconque des revendications précédentes,
dans lequel toutes pièces données de l'image plein champ ayant une étiquette de la première annotation, qui est associée à un premier type des types multiples, n'inclut pas des fractions de tissu d'autres types des types multiples au-delà d'au moins l'un d'un quota déterminé à l'avance ou plus grandes qu'un seuil de dimension déterminé à l'avance.

10. Le procédé mis en œuvre par ordinateur de l'une quelconque des revendications précédentes, comprenant en outre :
- obtenir une autre image plein champ,
- déterminer un résultat de segmentation utilisant l'algorithme de segmentation pour l'autre image plein champ, et
- sur la base du résultat de segmentation, détecter un tissu de type tumeur dans l'autre image plein champ.
